# EUROPEAN PATENT APPLICATION

(11) **EP 4 841 226 A1**
(43) Date of publication of application: **18.11.2026**
(21) Application number: 24960529.6
(22) Date of filing: 13.11.2024
(51) Int. Cl.: G01L 1/14

(54) **PRESSURE SENSOR**

(71) Applicant: Shokz Global Limited, Hong Kong 999077 (CN)
(72) Inventor: DENG, Wenjun, Shenzhen, Guangdong 518108 (CN); YUAN, Yongshuai, Shenzhen, Guangdong 518108 (CN); HUANG, Yujia, Shenzhen, Guangdong 518108 (CN)
(74) Representative: Wang, Bo
(86) International application number: PCT/CN2024/131780
(87) International publication number: WO 2026/102607

(57) **Abstract**

A pressure sensor (200). The pressure sensor (200) comprises: a first capacitor formed by a first electrode (230), a second electrode (250), and a first dielectric layer (240) located therebetween. A first conductive microstructure (234) contacting the first dielectric layer (240) is disposed on the first electrode (230), and when the first electrode (230) approaches the second electrode (250) in response to an external pressure, the first conductive microstructure (234) deforms, and the deformation changes a first capacitance of the first capacitor and generates a sensing signal that varies with the first capacitance.

## Description

### TECHNICAL FIELD

The present disclosure relates to a field of sensing, and in particular to a pressure sensor.

### BACKGROUND

A pressure sensor is a device that converts a pressure signal into an electrical signal to achieve measurement of a pressure. Pressure sensors have been widely used in industrial, agricultural, medical, and other fields. Based on the above, with the rise of the consumer electronics technology industry and the development of human-computer interaction technologies, higher requirements have been placed on the size, sensitivity, accuracy, and linearity of pressure sensors.

Therefore, it is desirable to provide a pressure sensor with a simple structure, which reduces a design and manufacturing cost of the pressure sensor while ensuring that the pressure sensor has relatively high accuracy and sensitivity.

### SUMMARY

One or more embodiments of the present disclosure provide a pressure sensor. The pressure sensor includes: a first capacitor formed of a first electrode, a second electrode, and a first dielectric layer located between the first electrode and the second electrode. A first conductive microstructure is disposed on the first electrode and is in contact with the first dielectric layer, and when the first electrode approaches the second electrode in response to an external pressure, the first conductive microstructure undergoes a deformation, and the deformation changes a first capacitance of the first capacitor and generates a sensing signal varying with the first capacitance. Through the configuration, when a sensitive region of the pressure sensor is subjected to pressure, although a gap (i.e., a thickness of the first dielectric layer) between a bottommost end of the first electrode and the second electrode remains unchanged, the first conductive microstructure is internally deformed due to a presence of the first conductive microstructure, resulting in changes in both a contact area between the first conductive microstructure and the first dielectric layer and an equivalent dielectric constant. The pressure sensor accordingly has higher sensitivity than a conventional variable-gap pressure sensor.

In some embodiments, the first conductive microstructure includes a plurality of flexible conductive protrusions distributed at intervals, and a gap is formed between adjacent flexible conductive protrusions of the plurality of flexible conductive protrusions. Such configuration allows the flexible conductive protrusions to be easily deformed when a sensitive region of the pressure sensor is subjected to pressure, resulting in significant changes in both the contact area between the flexible conductive protrusions and the first dielectric layer and the equivalent dielectric constant. The pressure sensor accordingly has high sensitivity.

In some embodiments, the first conductive microstructure is formed of a metal-coated conductive sponge or a metal-coated conductive foamed material.

In some embodiments, each of the plurality of flexible conductive protrusions is formed of conductive silicone or conductive polydimethylsiloxane (PDMS).

In some embodiments, a thickness of each of the plurality of flexible conductive protrusions ranges from 1 µm to 500 µm, and a size of the gap of each of the plurality of flexible conductive protrusions ranges from 1 µm to 500 µm. Through the configuration, the pressure sensor can have high sensitivity and a small size to achieve device miniaturization.

In some embodiments, in a state without the external pressure, a ratio of the contact area of the first conductive microstructure and the first dielectric layer to an area of the first dielectric layer is in a range from one ten-thousandth to one tenth.

In some embodiments, the flexible conductive protrusions in the first conductive microstructure are non-uniformly distributed.

In some embodiments, the first electrode includes a conductive layer, a conductive connection layer, and a conductive microstructure layer that are sequentially stacked, and the first conductive microstructure is located on a side of the conductive microstructure layer away from the conductive layer. Through the configuration, a structure of the first electrode is stable.

In some embodiments, the conductive layer is formed of flexible conductive silicone, an indium tin oxide (ITO) conductive film, or metal; the conductive connection layer is formed of conductive silicone, a conductive fabric, a conductive adhesive tape, or conductive epoxy adhesive; and the conductive microstructure layer is formed of a metal-coated conductive sponge, a metal-coated conductive foamed material, conductive silicone doped with conductive particles, or conductive PDMS.

In some embodiments, a thickness of the first dielectric layer is less than 20 µm, and a relative dielectric constant of the first dielectric layer is greater than 2. Through the configuration, sensitivity of the pressure sensor is maintained at a relatively high level, and the pressure sensor has a small size for ease of use.

In some embodiments, the thickness of the first dielectric layer is less than 2 µm, and the relative dielectric constant of the first dielectric layer is greater than 3. Through the configuration, the sensitivity of the pressure sensor is maintained at a higher level, and the pressure sensor has a small size for ease of use.

In some embodiments, a dielectric microstructure is disposed on the first dielectric layer and is in contact with the first electrode or the second electrode, and the dielectric microstructure includes a plurality of flexible dielectric protrusions distributed at intervals. By disposing the dielectric microstructure capable of generating elastic deformation similar to the first conductive microstructure on the first dielectric layer, a change in the contact area between the first dielectric layer and the electrode (the first electrode or the second electrode) is further increased, thereby improving the sensitivity of the pressure sensor.

In some embodiments, a second conductive microstructure is disposed on the second electrode and is in contact with the first dielectric layer. Such configuration allows the contact area between the second electrode and the first dielectric layer to also change under the external pressure, thereby improving the sensitivity of the pressure sensor.

In some embodiments, the first conductive microstructure and the second conductive microstructure are formed of different materials. Such configuration can avoid a mutual displacement between the first dielectric layer and the upper and lower electrodes (the first electrode or the second electrode).

In some embodiments, the pressure sensor further includes: a third electrode, wherein the first electrode. The second electrode, and the third electrode are arranged at intervals, and two outermost electrodes are grounded. Such configuration can shield external electrical signals or magnetic signals from interfering with an internal sensing signal of the pressure sensor, thereby improving accuracy of the internal sensing signal of the pressure sensor.

In some embodiments, the pressure sensor further includes: a second capacitor formed of a third electrode, a fourth electrode, and a second dielectric layer located between the third electrode and the *fourth electrode. The first capacitor and the second capacitor are arranged along a pressure-sensitive direction of the pressure sensor. By forming two capacitors in the pressure sensor, both of the two capacitors may be affected by an external pressure and output sensing signals.

In some embodiments, two outermost electrodes in the pressure-sensitive direction are grounded, and two middle electrodes in the pressure-sensitive direction are electrically connected. By grounding the outermost electrodes, external electrical signals or magnetic signals can be shielded from interfering with an internal sensing signal of the pressure sensor, thereby improving accuracy of the internal sensing signal of the pressure sensor. Further, by electrically connecting the two middle electrodes, the two capacitors can also be considered as a parallel structure (a total capacitance value of the two capacitors is greater than that of a single capacitor), improving the sensitivity of the pressure sensor; or the sensing signals of the two capacitors are output respectively, avoiding mutual influence between the two capacitors, which improves the sensitivity of the pressure sensor.

In some embodiments, the pressure sensor further includes: a second capacitor formed of a third electrode, a fourth electrode, and a second dielectric layer located between the third electrode and the fourth electrode. The second capacitor and the first capacitor are arranged at intervals along a direction perpendicular to a pressure-sensitive direction of the pressure sensor. By arranging the second capacitor and the first capacitor at intervals along the direction perpendicular to the pressure-sensitive direction of the pressure sensor, synchronous measurement of a source position and a magnitude of the external pressure can be achieved.

In some embodiments, the first electrode and the third electrode are electrically connected, a fifth electrode is disposed on a side of the second electrode and the fourth electrode away from the first electrode and the third electrode, and the first electrode, the third electrode, and the fifth electrode are grounded. Such configuration can shield external electrical signals or magnetic signals from interfering with an internal sensing signal of the pressure sensor, thereby improving accuracy of the internal sensing signal of the pressure sensor.

In some embodiments, the first electrode and the third electrode are two different regions on one piece of electrode. Such arrangement can further simplify a structure and a preparation process of the pressure sensor.

In some embodiments, the pressure sensor further comprises: a third electrode located on a same side of the first electrode as the second electrode. The second electrode and the third electrode are respectively opposite to different regions of the first electrode, and a second dielectric layer exists between the third electrode and the first electrode to form a second capacitor. By arranging the third electrode and the second electrode on the same side of the first electrode, when the pressure sensor is connected to an external circuit, only the second electrode and the third electrode need to be led out, without wiring design for the first electrode. Since both the second electrode and the third electrode are located on the same side of the capacitor, the second electrode and the third electrode can be conveniently connected to a same circuit board, thereby reducing a wiring difficulty of the pressure sensor and greatly simplifying a structure and a preparation process of the pressure sensor.

### BRIEF DESCRIPTION OF THE DRAWINGS

The present disclosure is further illustrated in terms of exemplary embodiments. These exemplary embodiments are described in detail with reference to the drawings. These embodiments are not restrictive, and in these embodiments, same numbers denote same structures, in which:
FIG. 1 is a schematic structural diagram of an iontronic pressure sensor according to some embodiments of the present disclosure;
FIG. 2A is a schematic structural diagram of a pressure sensor according to some embodiments of the present disclosure;
FIG. 2B is a schematic structural diagram of a pressure sensor according to some other embodiments of the present disclosure;
FIG. 2C is a schematic structural diagram of a pressure sensor according to some other embodiments of the present disclosure;
FIG. 2D is a schematic structural diagram of a conductive microstructure according to some embodiments of the present disclosure;
FIG. 2E is a schematic structural diagram of a pressure sensor according to some other embodiments of the present disclosure;
FIG. 2F is a schematic structural diagram of a pressure sensor according to some other embodiments of the present disclosure;
FIG. 3A is a schematic structural diagram of a pressure sensor according to some other embodiments of the present disclosure;
FIG. 3B is a schematic structural diagram of a pressure sensor according to some other embodiments of the present disclosure;
FIG. 4A is a schematic structural diagram of a pressure sensor according to some other embodiments of the present disclosure;
FIG. 4B is a schematic structural diagram of a pressure sensor according to some other embodiments of the present disclosure;
FIG. 5A is a schematic structural diagram of a pressure sensor according to some other embodiments of the present disclosure;
FIG. 5B is a schematic structural diagram of a pressure sensor according to some other embodiments of the present disclosure;
FIG. 5C is a schematic structural diagram of a pressure sensor according to some other embodiments of the present disclosure;
FIG. 5D is a schematic structural diagram of a pressure sensor according to some other embodiments of the present disclosure;
FIG. 5E is a schematic structural diagram of a pressure sensor according to some other embodiments of the present disclosure;
FIG. 5F is a schematic structural diagram of a pressure sensor according to some other embodiments of the present disclosure;
FIG. 6A is a sensitivity test diagram of a pressure sensor according to some embodiments of the present disclosure; and
FIG. 6B is a reliability test diagram of a pressure sensor according to some embodiments of the present disclosure.

### DETAILED DESCRIPTION

For a clearer illustration of the technical solutions of the embodiments of the present disclosure, the accompanying drawings to be used in the description of the embodiments will be briefly introduced below. Evidently, the drawings in the following description are merely some examples or embodiments of the present disclosure, and a person of ordinary skill in the art may apply the present disclosure to other similar scenarios based on these drawings without exercising inventive faculty. Unless obviously from the context or stated otherwise, the same reference numerals in the drawings represent the same structures or operations.

It should be understood that the terms "system", "device", "unit" and/or "module" as used herein are a manner for distinguishing different components, elements, parts, portions, or assemblies of different levels. However, if other words can achieve the same purpose, the words can be replaced by other expressions.

As shown in the present disclosure and the claims, unless the context clearly indicates an exception, the terms "a", "an", and/or "the" are not limited to the singular, but may also include the plural. Generally, the terms "comprising" and "including" only indicate the inclusion of explicitly identified steps and elements, and these steps and elements do not constitute an exhaustive list, and the manner or device may also include other steps or elements.

In the description of the present disclosure, it is to be understood that the terms "first", "second", "third", "fourth", or the like are merely for descriptive purposes, and are not to be construed as indicating or implying relative importance or implicitly indicating the quantity of the technical features indicated. Therefore, the features defined by "first", "second", "third", "fourth", or the like may explicitly or implicitly include at least one such feature. In the description of the present disclosure, the meaning of "a plurality of" is at least two, for example, two, three, or the like, unless otherwise explicitly and specifically limited.

In the present disclosure, unless otherwise expressly stipulated and defined, the terms "connected", "fixed", or the like should be broadly understood. For example, the term "connected" may refer to a fixed connection, a detachable connection, or an integral connection; may be a mechanical connection or an electrical connection; may be directly connected or indirectly connected through an intermediate medium, or may be an internal communication between two elements or an interaction relationship between two elements, unless otherwise expressly limited. For a person of ordinary skill in the art, the specific meanings of the above terms in the present disclosure can be understood according to specific circumstances.

A pressure sensor is configured to convert a pressure signal into an electrical signal, thereby implementing detection of pressure.

A conventional capacitive pressure sensor (also referred to as a plate-type pressure sensor), as a typical pressure sensor solution, includes a parallel plate capacitor. When an external pressure is applied to the capacitive pressure sensor, a distance between electrodes of the parallel plate capacitor changes, thereby causing a change in a capacitance of the parallel plate capacitor, and an electrical signal generated therefrom can reflect the presence of the external pressure, and can even further reflect a magnitude of the external pressure.

A structure of the conventional capacitive pressure sensor is simple, but has relatively low sensitivity. An electret pressure sensor, as an emerging capacitive pressure sensor, is thus developed.

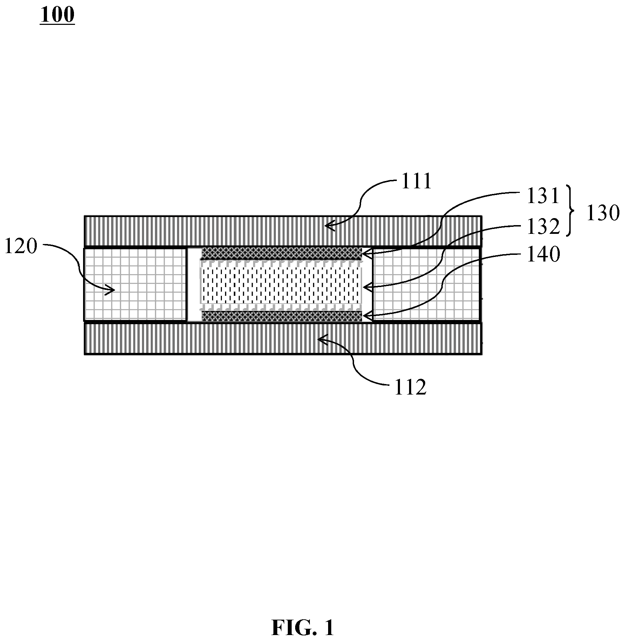

FIG. 1 is a schematic diagram illustrating a structure of an electret pressure sensor according to some embodiments of the present disclosure.

As shown in FIG. 1, the electret pressure sensor 100 includes a substrate 111 and a substrate 112 that are oppositely disposed, and a support layer 120 and two opposite electrodes (an electrode 130 and an electrode 140) are disposed between the substrate 111 and the substrate 112. The electrode 130 includes a conductive layer 131 and a gel layer 132 (or may only include the gel layer 132).The material of the substrates (including the substrate 111 and the substrate 112) may be a Printed Circuit Board (PCB), a Flexible Printed Circuit (FPC), or the like. The material of the conductive layer 131 and the electrode 140 may be a conductor such as metal, conductive silicone, or the like. The material of the gel layer 132 is an ionic gel, and the gel layer 132 may be provided with a conductive microstructure in contact with the conductive layer 131 and/or the electrode 140.

Based on the above structure, when an external pressure is applied to the electret pressure sensor 100, a contact area between a surface of the gel layer 132 and the electrode 140 changes, thereby causing a change in a capacitance of the electret capacitor, and an electrical signal generated therefrom can reflect the presence of the external pressure, and can even further reflect a magnitude of the external pressure.

Compared with the conventional capacitive pressure sensor (i.e., the parallel plate pressure sensor), the electret pressure sensor has higher sensitivity, but design and preparation complexity are also significantly increased, thereby greatly increasing a preparation cost; in addition, if the electret pressure sensor is subjected to excessive pressure, an ionic gel in the gel layer may be squeezed out, thereby causing failure of sensing performance. Therefore, a reliability of the electret pressure sensor is low.

Based on this, embodiments of the present disclosure provide a pressure sensor, which overcomes the above shortcomings of other capacitive pressure sensors, and simultaneously has advantages of simple structure, high sensitivity, low cost, and ease of mass production.

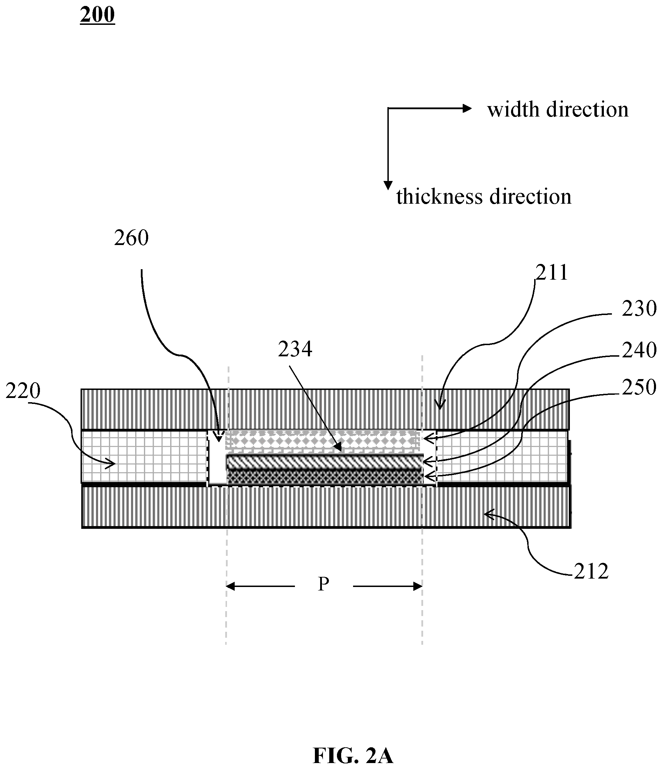

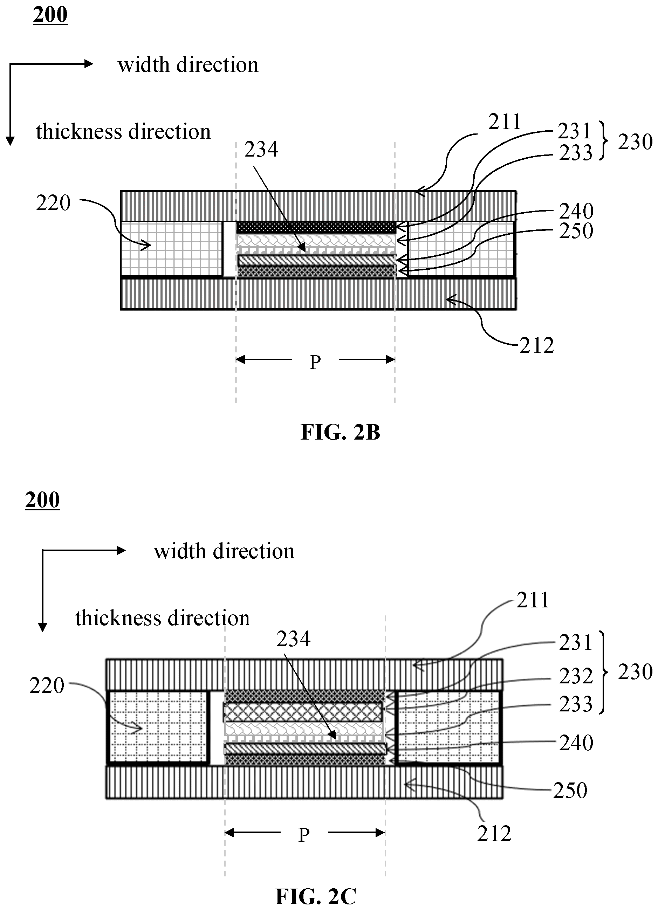

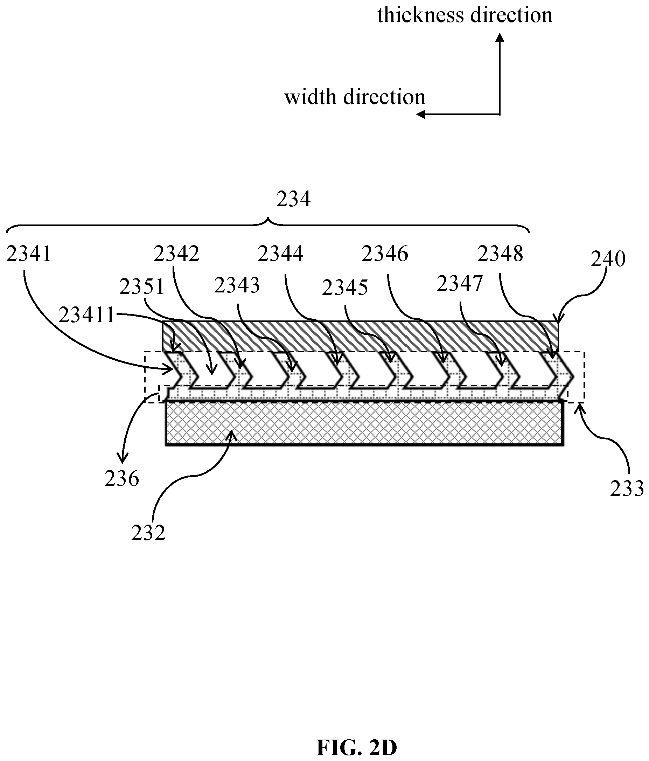

FIG. 2A is a schematic diagram illustrating a structure of a pressure sensor according to some embodiments of the present disclosure; FIG. 2B is a schematic diagram illustrating a structure of a pressure sensor according to other embodiments of the present disclosure; FIG. 2C is a schematic diagram illustrating a structure of a pressure sensor according to other embodiments of the present disclosure; and FIG. 2D is a schematic diagram illustrating a structure of a conductive microstructure according to some embodiments of the present disclosure.

As shown in FIG. 2A, the pressure sensor 200 includes a first capacitor formed of a first electrode 230, a second electrode 250, and a first dielectric layer 240 located between the first electrode 230 and the second electrode 250. A first conductive microstructure 234 is disposed on the first electrode 230 and is in contact with the first dielectric layer 240. In the present disclosure, the first conductive microstructure refers to a conductive structure having gaps (or voids) within it. When the first electrode 230 approaches the second electrode 250 in response to an external pressure, the first conductive microstructure 234 undergoes a deformation, and the deformation changes a first capacitance of the first capacitor and generates a sensing signal varying with the first capacitance.

As shown in FIG. 2A, the pressure sensor 200 further includes a substrate 211, a substrate 212, and a support body 220 located around the first capacitor. The substrate 211 and the substrate 212 are respectively located on outer sides of the first electrode 230 and the second electrode 250, and the support body 220 is located between the substrate 211 and the substrate 212 and surrounds the first capacitor.

It can be understood that, in a thickness direction (or referred to as a pressure-sensitive direction) of the pressure sensor 200, a region opposite to the first capacitor is a sensitive region of the pressure sensor 200, and as shown in FIGs. 2A to 2C, the pressure sensor 200 has a sensitive region P. When an external pressure acts on the sensitive region P (e.g., acts on a surface of the substrate 211 or 212 opposite to the sensitive region P), the pressure sensor 200 may achieve accurate identification of the external pressure.

Specifically, gaps exist in the first conductive microstructure 234, and when the sensitive region of the pressure sensor 200 is subjected to pressure, although a gap between a bottom end of the first electrode 230 and the second electrode 250 (i.e., a thickness of the first dielectric layer 240) does not change, due to the presence of the first conductive microstructure 234, an interior of the first conductive microstructure 234 undergoes deformation, causing both a contact area between the first conductive microstructure 234 and the first dielectric layer 240 and an equivalent dielectric constant to change, thereby causing the pressure sensor 200 to have higher sensitivity than a conventional variable-gap pressure sensor.

A method for determining a capacitance value of a capacitor (e.g., the first capacitor) within the pressure sensor 200 may be as shown in the following formulas (1) to (3): $C = {C}_{1} + {C}_{2}$ (1) ${C}_{1} = {ε}_{0} {ε}_{r 1} \frac{{S}_{1}}{t}$ (2) ${C}_{2} = {ε}_{0} {ε}_{r 2} \frac{{S}_{2}}{t}$ (3) where C is the capacitance value of the first capacitor within the pressure sensor 200; C1 is a capacitance value generated by a portion of the first conductive microstructure 234 in contact with the first dielectric layer 240; C2 is a capacitance value generated by a portion of the first conductive microstructure 234 not in contact with the first dielectric layer 240; t is a thickness of the first dielectric layer 240; ε0 is an absolute dielectric constant; εr1 is a relative dielectric constant of the first dielectric layer 240; S1 is a contact area between the first conductive microstructure 234 and the first dielectric layer 240; S2 is an area of a portion of the first conductive microstructure 234 not in contact with the first dielectric layer 240 (i.e., a sum of areas at openings of the gaps); εr2 is an overall equivalent dielectric constant of air in a noncontact portion and the first dielectric layer 240; and d is an average distance between a noncontact portion of the first electrode 230 (or the first conductive microstructure 234) and the second electrode 250.

As can be seen from the above formulas (1) to (3), C1 is proportional to S1, and C2 is proportional to S2. When the pressure sensor 200 is subjected to an external pressure, an interior of the first conductive microstructure (e.g., the flexible conductive protrusions described below) undergoes deformation, S1 increases, thereby causing C1 to increase, while d decreases, εr2 increases, thereby causing C2 to increase, and the two act synchronously, thereby causing the total capacitance C to increase, thereby allowing the pressure sensor 200 to obtain extremely high sensitivity. In addition, under the action of the external pressure, a rate of change of the contact area of the first conductive microstructure 234 will be much greater than a rate of change of d, and accordingly, a contribution of C1 to the sensitivity is greater than that of C2. Therefore, when S1 is unchanged, the larger a proportion of C 1 in the capacitance value C of the first capacitor, the higher the sensitivity of the pressure sensor 200 will be. That is, the smaller the thickness t of the first dielectric layer 240 and the higher the relative dielectric constant εr1, the larger the proportion of C1 in the pressure sensor 200, and the higher the overall sensitivity of the pressure sensor 200 will be.

The substrate 211 and the substrate 212 are configured to provide housing protection for the pressure sensor 200. The substrate 211 and the substrate 212 are themselves non-conductive. In some embodiments, the substrate 211 and the substrate 212 may be a semi-rigid PCB or a FPC, or the substrate 211 and the substrate 212 may be made of flexible insulating materials such as PET, PI, PDMS, or silicone, or the like. A thickness of the substrate 211 and the substrate 212 may be in a range of 5 µm to 500 µm.

The support body 220 is configured to provide support and fixation in the pressure sensor 200. A material of the support body 220 may be an insulating adhesive material, e.g., hot melt adhesive, silicone, epoxy adhesive, or double-sided adhesive, or the like, configured to bond the substrate 211 and the substrate 212 and to provide support. As shown in FIG. 2A, the support body 220, the substrate 211, and the substrate 212 form a cavity 260, and the cavity 260 accommodates the first electrode 230, the first dielectric layer 240, and the second electrode 250, thereby protecting the first capacitor formed of the first electrode 230, the first dielectric layer 240, and the second electrode 250.

In some embodiments, the first electrode 230 is a single-layer conductive structure. In the present disclosure, the single-layer structure refers to a structure made of a same material. For example, the first electrode 230 is a single-layer structure made of conductive silicone, conductive PDMS, or other flexible conductive materials. Based on this, on a surface of the first electrode 230, there is the first conductive microstructure in contact with the first dielectric layer 240. The first conductive microstructure is made of conductive silicone doped with conductive particles, conductive PDMS, or other flexible conductive materials (which is the same material as the first electrode 230). For example, if the first electrode 230 is made of conductive silicone, then the first conductive microstructure is made of conductive silicone doped with conductive particles.

In some embodiments, the first electrode 230 is a multi-layer conductive structure, for example, as shown in FIG. 2B, the first electrode 230 includes a conductive layer 231 and a conductive microstructure layer 233 sequentially stacked. In this case, the conductive microstructure layer 233 includes the first conductive microstructure, and the first conductive microstructure is located on a side of the conductive microstructure layer 233 away from the conductive layer 231, i.e., the first conductive microstructure is disposed on a side in contact with the first dielectric layer 240.

The conductive layer 231 is formed of a conductive material, for example, the conductive layer 231 may be formed of a metal (e.g., copper, silver, or the like), flexible conductive silicone, or an ITO conductive film.

The conductive microstructure layer 233 is a flexible conductor having the first conductive microstructure on a surface thereof. The conductive microstructure layer 233 may be directly bonded to the conductive layer 231. For example, when the conductive layer 231 is in a form of conductive silicone, the conductive microstructure layer 233 and the conductive layer 231 may be directly bonded.

In some embodiments, to further stabilize a structure of the first electrode 230, the first electrode 230 further includes a conductive connection layer 232. As shown in FIG. 2C, the first electrode 230 includes the conductive layer 231, the conductive connection layer 232, and the conductive microstructure layer 233 sequentially stacked.

The conductive connection layer 232 is configured to connect the conductive layer 231 and the conductive microstructure layer 233. A material of the conductive connection layer 232 is a conductive material. In some embodiments, the conductive connection layer 232 is formed of conductive silicone, conductive adhesive, conductive fabric, conductive adhesive tape, or conductive epoxy adhesive.

In some embodiments, the conductive layer 231, the conductive connection layer 232, and the conductive microstructure layer 233 included in the first electrode 230 may be made of a same material or different materials. For example, the conductive layer 231 is made of an ITO conductive film, the conductive connection layer 232 is made of conductive fabric, and the conductive microstructure layer 233 is made of conductive silicone. Further for example, the conductive layer 231 and the conductive connection layer 232 are made of conductive silicone, and the conductive microstructure layer 233 is made of a metal-coated conductive sponge or a metal-coated conductive foamed material. Still further for example, the conductive layer 231, the conductive connection layer 232, and the conductive microstructure layer 233 are all made of conductive silicone.

In some embodiments, the conductive microstructure layer 233 is formed of a metal-coated conductive sponge, a metal-coated conductive foamed material, or conductive silicone doped with conductive particles or conductive PDMS, or the like. Specifically, as shown in FIG. 2D, the conductive microstructure layer 233 includes a substrate 236 and a first conductive microstructure 234.

The substrate 236 is a structure in the conductive microstructure layer 233 configured to support the first conductive microstructure 234.

In some embodiments, the first conductive microstructure 234 is formed of a metal-coated conductive sponge or a metal-coated conductive foamed material. For example, the first conductive microstructure 234 may be formed by electroplating an inert metal (e.g., nickel or the like) on a surface of a mesh polyester foam (or other sponge materials).

In some embodiments, in order to allow the first conductive microstructure 234 to readily deform internally when a sensitive region of the pressure sensor is subjected to an external pressure, thereby causing a substantial change in both a contact area between the first conductive microstructure 234 and the first dielectric layer and an equivalent dielectric constant, and further allowing the pressure sensor to have a higher sensitivity, the first conductive microstructure 234 includes a plurality of flexible conductive protrusions distributed at intervals, and a gap is formed between adjacent flexible conductive protrusions of the plurality of flexible conductive protrusions. Merely by way of example, as shown in FIG. 2D, the first conductive microstructure 234 includes a plurality of flexible conductive protrusions distributed at intervals (including flexible conductive protrusion 2341, flexible conductive protrusion 2342, flexible conductive protrusion 2343, flexible conductive protrusion 2344, flexible conductive protrusion 2345, flexible conductive protrusion 2346, flexible conductive protrusion 2347, and flexible conductive protrusion 2348); a gap is formed between two flexible conductive protrusions (i.e., a gap exists between adjacent flexible conductive protrusions). For example, a gap 2351 exists between the flexible conductive protrusion 2341 and the flexible conductive protrusion 2342.

In some embodiments, the flexible conductive protrusions can be formed of conductive silicone or conductive PDMS. In some embodiments, the flexible conductive protrusions can be formed of a metal-coated conductive sponge or a metal-coated conductive foamed material. In some embodiments, the shape of the flexible conductive protrusions is a polyline shape as shown in FIG. 2D. In some embodiments, the shape of the flexible conductive protrusions may also be a pyramidal shape, a groove shape, or the like.

In some embodiments, the flexible conductive protrusions in the first conductive microstructure 234 are uniformly distributed. The uniform distribution refers to that a spacing between any adjacent flexible conductive protrusions in the first conductive microstructure 234 (i.e., a width of any gap) is equal or approximately equal. For example, as shown in FIG. 2D, the spacing between the flexible conductive protrusion 2341 and the flexible conductive protrusion 2342, the spacing between the flexible conductive protrusion 2342 and the flexible conductive protrusion 2343, ..., and the spacing between the flexible conductive protrusion 2347 and the flexible conductive protrusion 2348 may all be equal, so as to form uniformly distributed flexible conductive protrusions. In some embodiments, the spacing of the flexible conductive protrusions is in a range of 1 µm to 500 µm. For example, the spacing of the flexible conductive protrusions may be 5 µm, 50 µm, 100 µm, 200 µm, or the like.

In some embodiments, the flexible conductive protrusions in the first conductive microstructure 234 are non-uniformly distributed. The non-uniform distribution refers to that, in the first conductive microstructure 234, the spacing between at least some adjacent flexible conductive protrusions is not equal. For example, as shown in FIG. 2D, the spacing between the flexible conductive protrusion 2341 and the flexible conductive protrusion 2342 is 5 µm, the spacing between the flexible conductive protrusion 2342 and the flexible conductive protrusion 2343 is 7 µm, the spacing between the flexible conductive protrusion 2343 and the flexible conductive protrusion 2344 is 5 µm, ..., and the spacing between the flexible conductive protrusion 2347 and the flexible conductive protrusion 2348 is 6 µm. For example, the first conductive microstructure is formed by electroplating a metal on a surface of a mesh polyester foam (or other sponge materials). Since the mesh pores or protrusions of the mesh polyester foam (or other sponge materials) are non-uniformly distributed, the flexible conductive protrusions in the finally formed first conductive microstructure are also non-uniformly distributed.

It can be understood that when the pressure sensor 200 is not subjected to an external pressure, a surface of each flexible conductive protrusion may be in contact with the first dielectric layer 240. In this case, it may be considered that each flexible conductive protrusion does not deform in a pressure-sensitive direction, and the contact area between the first conductive microstructure 234 and the first dielectric layer 240 is a sum of contact areas between end portions of each flexible conductive protrusion (e.g., an end portion 23411 of the flexible conductive protrusion 2341) and the first dielectric layer 240, as shown in FIG. 2D.

When the sensitive region of the pressure sensor 200 is subjected to an external pressure, each flexible conductive protrusion is pressed in the pressure-sensitive direction, and the contact area between each flexible conductive protrusion and the first dielectric layer 240 increases. In this case, the contact area between the first conductive microstructure 234 and the first dielectric layer 240 is the sum of the contact areas between the deformed flexible conductive protrusions and the first dielectric layer 240.

When the pressure sensor 200 is not subjected to an external pressure, a ratio of the contact area between the first conductive microstructure 234 and the first dielectric layer 240 (i.e., the sum of the contact areas between the end portions of each flexible conductive protrusion and the first dielectric layer 240) to the area of the first dielectric layer 240 should not be too large or too small. If the ratio is too large, it may lead to insufficient space for deformation of the flexible conductive protrusions, thereby causing a too small change in the contact area between the first conductive microstructure 234 and the first dielectric layer 240 when subjected to an external pressure, thus reducing the sensitivity of the pressure sensor 200; if the ratio is too small, it may cause the gaps between the flexible conductive protrusions to be too sparse. In this case, the capacitance change of the pressure sensor 200 may be mainly dominated by a change in spacing between the first electrode 230 and the second electrode 250, i.e., the capacitance value C2 generated by a portion of the first conductive microstructure 234 not in contact with the first dielectric layer 240 in Equations (1) to (3), thereby leading to a reduction in the sensitivity of the pressure sensor 200. Therefore, in some embodiments, in order to improve the sensitivity of the pressure sensor 200, in a state that the pressure sensor 200 is not subjected to an external pressure, the ratio of the contact area between the first conductive microstructure 234 and the first dielectric layer 240 to the area of the first dielectric layer 240 is in a range of 1:10000 to 1:10.

Since the thickness of the flexible conductive protrusions and the size of the gaps thereof can affect the degree of change in the contact area between the first electrode 230 (or the first conductive microstructure 234) and the first dielectric layer 240 under an external pressure, in some embodiments, in order to enable the pressure sensor 200 to have both a high sensitivity and a small size to achieve device miniaturization, the thickness of the flexible conductive protrusions is within a range of 1 µm to 500 µm, and the size of the gaps of the flexible conductive protrusions is within a range of 1 µm to 500 µm. In some embodiments, in order to ensure that the flexible conductive protrusions can generate sufficient deformation to ensure a sensitive range of the pressure sensor 200 to an external pressure when the pressure sensor 200 is subjected to an external pressure, the thickness of the flexible conductive protrusions is within a range of 10 µm to 400 µm, and the size of the gaps of the flexible conductive protrusions is within a range of 10 µm to 400 µm. In some embodiments, in order to ensure a large contact area between the first conductive microstructure 234 and the first dielectric layer 240 and simultaneously provide sufficient deformation space for the flexible conductive protrusions to ensure the sensitivity of the pressure sensor 200, the thickness of the flexible conductive protrusions is within a range of 50 µm to 300 µm, and the size of the gaps of the flexible conductive protrusions is within a range of 20 µm to 300 µm. In some embodiments, the thickness of the flexible conductive protrusions is within a range of 100 µm to 200 µm, and the size of the gaps of the flexible conductive protrusions is within a range of 50 µm to 200 µm. By limiting the thickness of the flexible conductive protrusions and the size of the gaps to the above-mentioned ranges, a large contact area between the first conductive microstructure 234 and the first dielectric layer 240 is ensured, and sufficient deformation space is provided for the flexible conductive protrusions, thereby allowing the sensitivity of the pressure sensor 200 to be at a high level.

In some embodiments, in order to further prevent the gaps between the respective flexible conductive protrusions from being too sparse, so as to improve the sensitivity of the pressure sensor 200, the size of the gaps is less than or equal to the thickness of the flexible conductive protrusions. For example, the size of the gaps is 100 µm, and the thickness of the flexible conductive protrusions is 300 µm.

It should be noted that the thickness of the flexible conductive protrusions refers to the size of the flexible conductive protrusions in a thickness direction of the pressure sensor (e.g., the size of the polyline-shaped flexible conductive protrusion in the thickness direction as shown in FIG. 2D).The size of the gaps refers to the size of the gaps in a width direction of the pressure sensor (e.g., the size of the gap 2351 in the width direction as shown in FIG. 2D). When the flexible conductive protrusions are non-uniformly distributed, the sizes of the respective gaps may be different. The size of the gaps refers to an average size of all of the gaps in the width direction as shown in FIG. 2D.

In some embodiments of the present disclosure, the first conductive microstructure can achieve a change in the contact area between the first electrode and the first dielectric layer. By forming the first conductive microstructure from a sponge or foamed material, or by forming the flexible conductive protrusions from conductive silicone or conductive PDMS, the manufacturing cost of the pressure sensor is reduced, which facilitates mass production of the pressure sensor, while simultaneously improving the sensitivity of the pressure sensor. Furthermore, by limiting the thickness of the flexible conductive protrusions and the size of the gaps, the first conductive microstructure can not only have good stability but also good deformation capability. For example, by setting the size of the gaps to be less than or equal to the thickness of the flexible conductive protrusions, it can prevent the flexible conductive protrusions from being too sparse, thereby leading to a reduction in the sensitivity of the pressure sensor. Furthermore, when the ratio of the contact area between the first conductive microstructure and the first dielectric layer to the area of the first dielectric layer (hereinafter referred to as a first ratio) is too small, based on the above-mentioned formulas, the capacitance generated by the contact portion is too small, thereby causing a reduction in the sensitivity of the pressure sensor; when the first ratio is too large (which means that the width of the gaps between the flexible conductive protrusions is too small), the amount of deformation of the flexible conductive protrusions may be limited under pressure, thereby causing a reduction in the variable amount of the capacitance value of the first capacitance, which also leads to a reduction in the sensitivity of the pressure sensor. Based on this, by limiting the magnitude of the first ratio, the sensitivity of the pressure sensor can be maintained at a high level.

The first dielectric layer 240 is configured to separate the first electrode 230 and the second electrode 250, thereby forming a first capacitor.

The material of the first dielectric layer 240 is an insulating material. For example, the first dielectric layer 240 may be made of PET, PI, PDMS, oxide ceramics, or the like.

The thinner the first dielectric layer 240, and the larger its dielectric constant, the higher the sensitivity of the pressure sensor 200. Specifically, referring to the above-mentioned Equations (1) to (3), a reduction in the thickness of the first dielectric layer 240 can cause d to decrease, and C2 is inversely proportional to d. Therefore, the thinner the first dielectric layer 240, the larger C2 can be (thereby causing C to be larger); furthermore, C1 is directly proportional to the relative dielectric constant εr1 of the first dielectric layer 240. Therefore, the larger the dielectric constant εr1 of the first dielectric layer 240, the larger C1 will be (also causing C to be larger). An increase in C can cause the sensitivity of the pressure sensor 200 to increase.

Based on this, in some embodiments, in order to maintain a high sensitivity of the pressure sensor 200 and enable the pressure sensor 200 to have a small size for easy use, the thickness of the first dielectric layer 240 is less than 20 µm, and the relative dielectric constant of the first dielectric layer 240 is greater than 2. Preferably, the thickness of the first dielectric layer 240 is less than 2 µm, and the relative dielectric constant of the first dielectric layer is greater than 3.

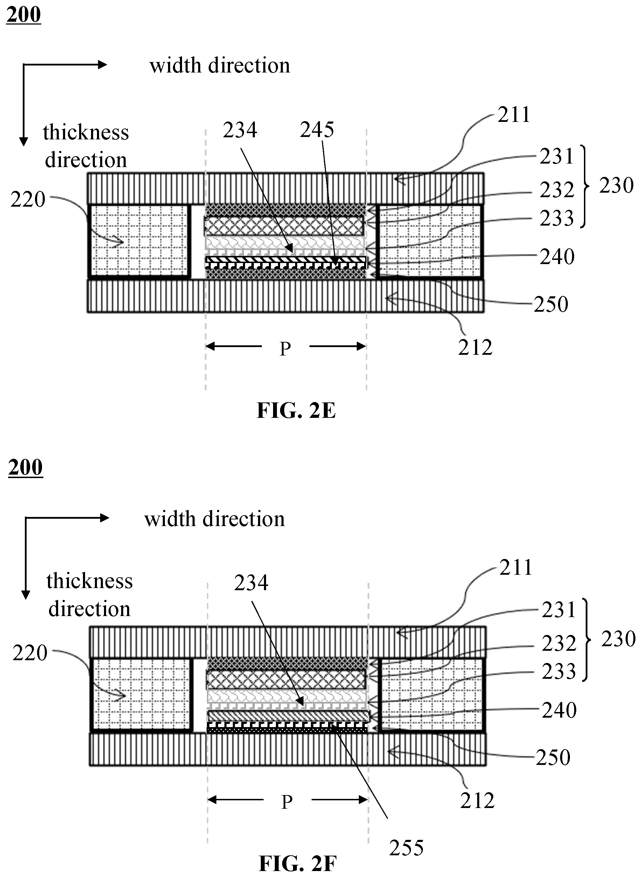

In some embodiments, a dielectric microstructure 245 in contact with the first electrode 230 or the second electrode 250 is disposed on the first dielectric layer 240. For example, as shown in FIG. 2E, the dielectric microstructure 245 in contact with the second electrode 250 is disposed on the first dielectric layer 240. In the present disclosure, the dielectric microstructure refers to a structure that cannot conduct electricity and within which there exist gaps (or voids). The dielectric microstructure 245 includes a plurality of flexible dielectric protrusions distributed at intervals. In some embodiments, the flexible dielectric protrusions may have a structure and a size that are the same as or similar to those of the flexible conductive protrusions. For example, the flexible dielectric protrusions may have the same polyline structure as the flexible conductive protrusions shown in FIG. 2D, and the thicknesses of both the flexible dielectric protrusions and the flexible conductive protrusions are all in a range of 1 µm to 500 µm, or the like.

When the first electrode 230 approaches the second electrode 250 in response to an external pressure, it will press the first dielectric layer 240. In this case, the flexible dielectric protrusions will also generate a deformation, and the deformation can change the contact area between the first dielectric layer 240 and the first electrode 230 or the second electrode 250 and the thickness of the first dielectric layer 240 itself, thereby changing the first capacitance. Furthermore, in order to improve the sensitivity of the pressure sensor 200, the dielectric microstructure 245 is disposed to be in contact with the first conductive microstructure 234.

In some embodiments of the present disclosure, by limiting the thickness and the relative dielectric constant of the first dielectric layer, the sensitivity of the pressure sensor can be improved; by disposing a dielectric microstructure similar to the first conductive microstructure and capable of generating elastic deformation on the first dielectric layer, a change in the contact area between the first dielectric layer and the electrodes (the first electrode or the second electrode) can be further increased, thereby improving the sensitivity of the pressure sensor.

The second electrode 250 may have the same as or similar structure to the first electrode 230. For example, the second electrode 250 is a single-layer conductive structure (e.g., the second electrode 250 is a single-layer structure formed of metal). For example, the second electrode 250 includes a conductive layer and a conductive microstructure layer that are sequentially stacked. For example, the second electrode 250 includes a conductive layer, a conductive connection layer, and a conductive microstructure layer that are sequentially stacked.

In some embodiments, in order to allow the contact area of the second electrode 250 and the first dielectric layer 240 to also change under an external pressure, so as to improve the sensitivity of the pressure sensor 200, as shown in FIG. 2F, the second conductive microstructure 255 is disposed on the second electrode 250 and is in contact with the first dielectric layer 240. The second conductive microstructure 255 may have the same as or similar material and structure to the first conductive microstructure 234, and thus will not be described in detail herein.

In some embodiments, in order to prevent a mutual offset from occurring between the first dielectric layer 240 and the upper and lower electrodes (the first electrode 230 or the second electrode 250), the first conductive microstructure 234 and the second conductive microstructure 255 are formed of different materials. Specifically, a conductive microstructure is formed of a material that is easily deformed, and another conductive microstructure is formed of a material with a relatively large contact resistance. For example, the first conductive microstructure 234 is formed of a metal-coated conductive sponge or a metal-coated conductive foamed material, and the second conductive microstructure 255 is made of conductive silicone doped with conductive particles.

In some embodiments, the first conductive microstructure 234 and the second conductive microstructure 255 may have different structures. For example, the first conductive microstructure 234 is a polyline structure, and the second conductive microstructure 255 is a pyramidal structure.

In some embodiments of the present disclosure, by disposing a second conductive microstructure in contact with the first dielectric layer 240 on the second electrode 250, the change in the contact area of the first dielectric layer 240 and the electrodes (the first electrode 230 or the second electrode 250) can be further increased, thereby improving the sensitivity of the pressure sensor 200. By forming the first conductive microstructure and the second conductive microstructure using different materials, a relative displacement between the first dielectric layer 240 and the electrodes (the first electrode or the second electrode) during use of the pressure sensor 200 can be effectively suppressed, while maintaining a large change rate of the contact area, so as to ensure the structural reliability and stability of the pressure sensor.

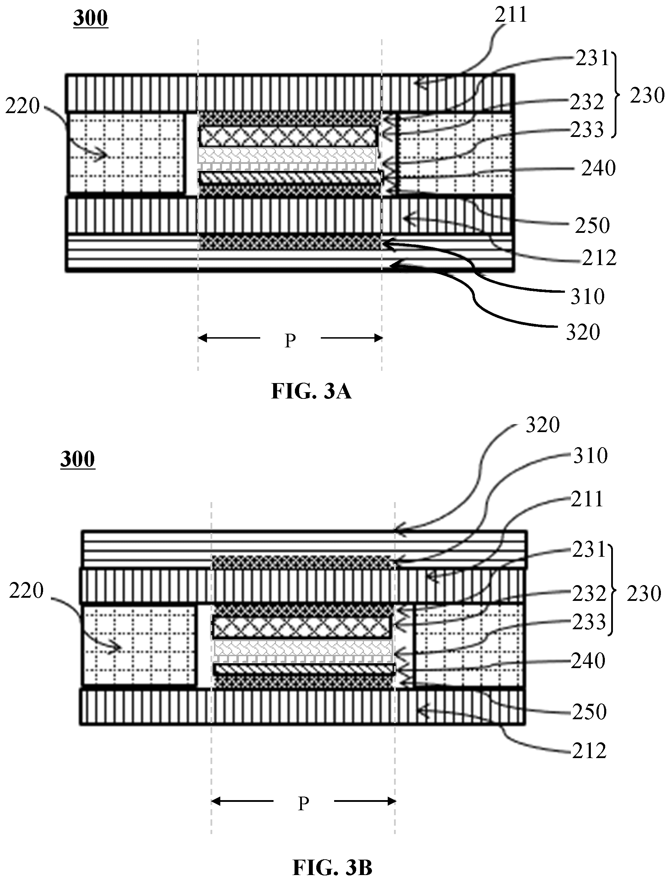

FIG. 3A is a schematic diagram illustrating a structure of a pressure sensor according to some other embodiments of the present disclosure; FIG. 3B is a schematic diagram illustrating a structure of a pressure sensor according to some other embodiments of the present disclosure.

In some embodiments, to improve the reliability and anti-interference capability of the pressure sensor, as shown in FIGs. 3A and 3B, the pressure sensor 300 further comprises a third electrode 310 on the basis of the structure of the pressure sensor 200. The third electrode 310 may have a material and structure same as or similar to the first electrode 230 and/or the second electrode 250. To save cost and facilitate production, the third electrode 310 may not include a conductive microstructure. More descriptions regarding the first electrode 230 and/or the second electrode 250 may be found elsewhere in the present disclosure (e.g., FIGs. 2A to 2D and related descriptions thereof).

The first electrode 230, the second electrode 250, and the third electrode 310 are arranged at intervals, and two outermost electrodes are grounded. For example, as shown in FIG. 3A, the first dielectric layer 240 is disposed between the first electrode 230 and the second electrode 250, and a second substrate 212 is disposed between the second electrode 250 and the third electrode 310. Specifically, the third electrode 310 is disposed on a side close to the second electrode 250, and the two outermost electrodes are the first electrode 230 and the third electrode 310. The first electrode 230 and the third electrode 310 are grounded (a grounding line is not shown in the figures). As another example, as shown in FIG. 3B, a first substrate 211 is disposed between the first electrode 230 and the third electrode 310, and the first dielectric layer 240 is disposed between the first electrode 230 and the second electrode 250. Specifically, the third electrode 310 is disposed on a side close to the first electrode 230, and the two outermost electrodes are the second electrode 250 and the third electrode 310. The second electrode 250 and the third electrode 310 are grounded (a grounding line is not shown in the figures).

In some embodiments, the pressure sensor 200 further includes a protective layer 320 configured to provide protection and support for the third electrode 310. As shown in FIGs. 3A and 3B, the protective layer 320 may be disposed on an outer side of the third electrode 310 and wrap the third electrode 310. The protective layer 320 is formed of an insulating material, for example, may be formed of flexible insulating materials such as a PCB, silicone, or the like.

In some embodiments of the present disclosure, by providing a third electrode, interference of external electric signals or magnetic signals on the internal sensing signal of the pressure sensor may be shielded, thereby improving the accuracy of the internal sensing signal of the pressure sensor.

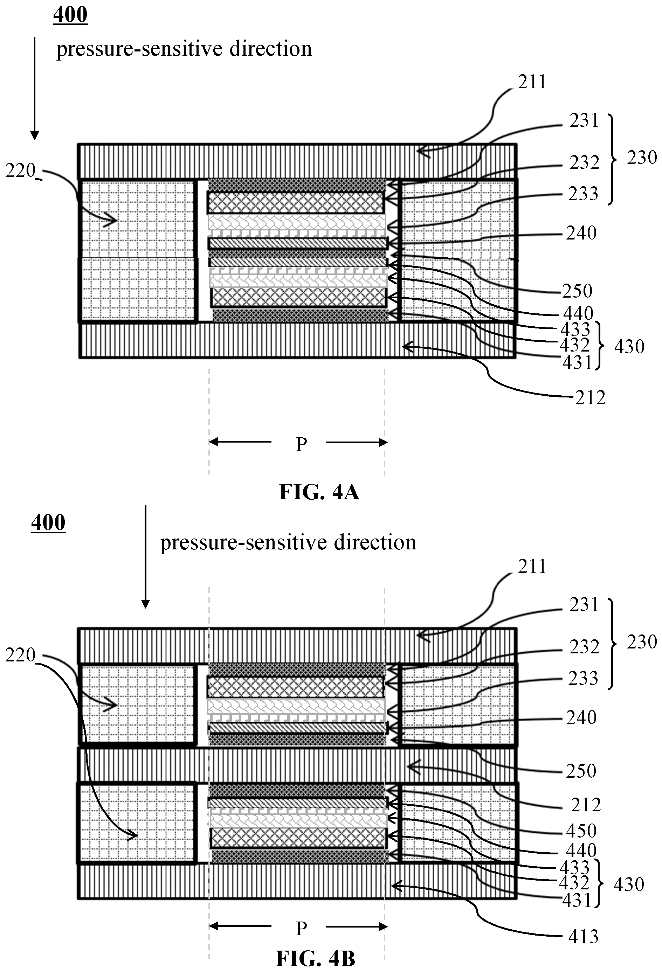

FIG. 4A is a schematic diagram illustrating a structure of a pressure sensor according to some other embodiments of the present disclosure. FIG. 4B is a schematic diagram illustrating a structure of a pressure sensor according to some other embodiments of the present disclosure.

In some embodiments, to simultaneously improve the sensitivity and anti-interference capability of the pressure sensor, the pressure sensor 200 further includes a second capacitor. The first capacitor and the second capacitor are arranged at intervals along the pressure-sensitive direction of the pressure sensor 200 (i.e., the thickness direction of the pressure sensor).

By way of example, as shown in FIG. 4A, a pressure sensor 400 further includes a third electrode 430 and a second dielectric layer 440 located between the second electrode 250 and the third electrode 430, based on the structure of the pressure sensor 200. The second electrode 250, the third electrode 430, and the second dielectric layer 440 located between the second electrode 250 and the third electrode 430 form the aforementioned second capacitor. The third electrode 430 may include the same or a similar structure as the first electrode 230. For example, the third electrode 430 may include a conductive layer 431, a conductive connection layer 432, and a conductive microstructure layer 433. The outermost first electrode 230 and third electrode 430 are grounded (grounding lines are not shown in the figures), and the second electrode 250 is connected to a data transmission line to output the sensing signal (electrical signal).

For example, as shown in FIG. 4B, the pressure sensor 400, based on the structure of the pressure sensor 200, further includes the third electrode 430, a fourth electrode 450, and the second dielectric layer 440 located between the third electrode 430 and the fourth electrode 450. The third electrode 430, the fourth electrode 450, and the second dielectric layer 440 form the aforementioned second capacitor. The second capacitor and the first capacitor formed of the first electrode 230, the second electrode 250, and the first dielectric layer 240 are arranged at intervals along the pressure-sensitive direction of the pressure sensor (i.e., the thickness direction of the pressure sensor shown in the figure).

Furthermore, to protect the second capacitor, the pressure sensor 400 further includes a third substrate 413 disposed on an outer side of the third electrode 430.

The third electrode 430, the fourth electrode 450, and the third substrate 413 may respectively have the same or a similar structure and material as the first electrode 230, the second electrode 250, and the first substrate 211. Furthermore, the conductive layer 431, the conductive connection layer 432, and the conductive microstructure layer 433 of the third electrode 430 may have the same or a similar structure and material as the conductive layer 231, the conductive connection layer 232, and the conductive microstructure layer 233 of the first electrode 230. More descriptions regarding the first electrode 230, the second electrode 250, and the first substrate 211 may be found elsewhere in the present disclosure (e.g., FIGs. 2A to 2D and related descriptions thereof).

In some embodiments, to simultaneously improve the sensitivity and anti-interference capability of the pressure sensor, the second capacitor and the first capacitor may be connected in parallel. In this case, the two outermost electrodes in the pressure-sensitive direction in the pressure sensor 400 are grounded, and the two middle electrodes are electrically connected. By way of example, as shown in FIG. 4B, the two outermost electrodes in the pressure-sensitive direction in the pressure sensor 400, i.e., the first electrode 230 and the third electrode 430, are grounded (grounding lines are not shown in the figures), and the two middle electrodes, i.e., the second electrode 250 and the fourth electrode 450, are electrically connected (e.g., connected by a wire or conductive silicone, or the like).

In some embodiments, the first capacitor and the second capacitor may respectively and independently output electrical signals (sensing signals), and the electrical signals respectively and independently output by the first capacitor and the second capacitor may be further processed to determine external pressure. For example, as shown in FIG. 4B, the two outermost electrodes in the pressure-sensitive direction in the pressure sensor 400, i.e., the first electrode 230 and the third electrode 430, are grounded (grounding lines are not shown in the figures). In this case, the two middle electrodes, i.e., the second electrode 250 and the fourth electrode 450, are not connected. The aforementioned further processing may be operations on the electrical signals respectively generated by the first capacitor and the second capacitor, such as summation, averaging, or the like.

In some embodiments of the present disclosure, the two capacitors are formed in the pressure sensor. Both capacitors can be affected by external pressure and output sensing signals. By grounding the outermost electrodes, external electrical or magnetic signals may be shielded from interfering with the internal sensing signal of the pressure sensor, thereby improving the accuracy of the internal sensing signal of the pressure sensor. Furthermore, when the two middle electrodes are electrically connected, the two capacitors may also be regarded as a parallel structure (the total capacitance value of the two capacitors is greater than that of a single capacitor), which improves the sensitivity of the pressure sensor. Alternatively, by respectively and independently outputting the sensing signals of the two capacitors, the mutual influence between the two capacitors may be avoided, which improves the sensitivity of the pressure sensor.

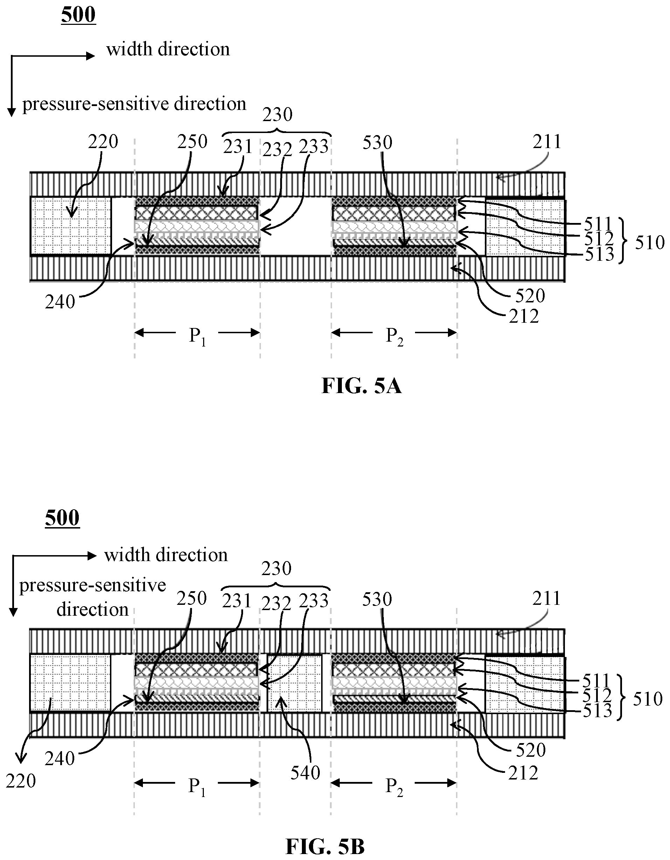

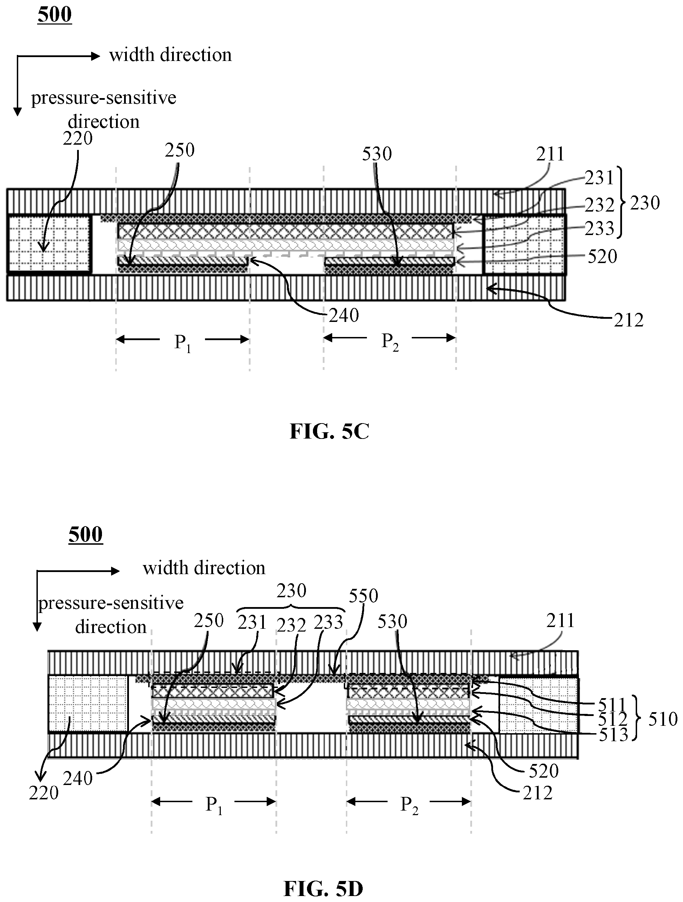

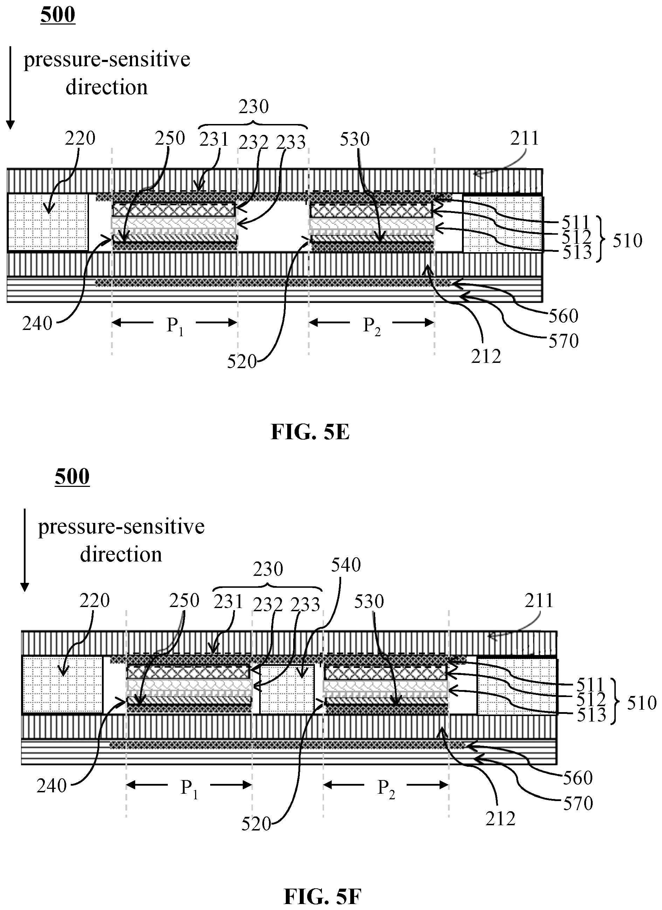

FIG. 5A is a schematic diagram illustrating a structure of a pressure sensor according to some other embodiments of the present disclosure; FIG. 5B is a schematic diagram illustrating a structure of a pressure sensor according to some other embodiments of the present disclosure; FIG. 5C is a schematic diagram illustrating a structure of a pressure sensor according to some other embodiments of the present disclosure; FIG. 5D is a schematic diagram illustrating a structure of a pressure sensor according to some other embodiments of the present disclosure; FIG. 5E is a schematic diagram illustrating a structure of a pressure sensor according to some other embodiments of the present disclosure; and FIG. 5F is a schematic diagram illustrating a structure of a pressure sensor according to some other embodiments of the present disclosure.

In some embodiments, to achieve synchronous measurement of pressure position and magnitude, the pressure sensor includes a plurality of capacitors arranged in parallel. Specifically, the plurality of capacitors are arranged at intervals along a direction perpendicular to the pressure-sensitive direction of the pressure sensor. Each capacitor respectively corresponds to its position and outputs a capacitance signal. Based on the sensing signal of the pressure sensor, it is determined which capacitor outputs the signal, the position of the capacitor outputting the sensing signal is determined, thereby determining the position where external pressure is received.

By way of example, as shown in FIGs. 5A and 5B, the pressure sensor 500, based on the structure of the pressure sensor 200, further includes a third electrode 510, a fourth electrode 530, and a second dielectric layer 520 located between the third electrode 510 and the fourth electrode 530. The third electrode 510, the fourth electrode 530, and the second dielectric layer 520 form a second capacitor. The second capacitor and the first capacitor (formed of the first electrode 230, the second electrode 250, and the first dielectric layer 240) are arranged at intervals along a direction perpendicular to the pressure-sensitive direction of the pressure sensor (i.e., the width direction of the pressure sensor shown in the figures).

The third electrode 510 and the fourth electrode 530 may respectively have the same or similar structure and material as the first electrode 230 and the second electrode 250. Furthermore, the conductive layer 511, the conductive connection layer 512, and the conductive microstructure layer 513 included in the third electrode 510 may have the same or similar structure and material as the conductive layer 231, the conductive connection layer 232, and the conductive microstructure layer 233 included in the first electrode 230. More descriptions regarding the first electrode 230 and the second electrode 250 may be found elsewhere in the present disclosure (e.g., FIGs. 2A to 2D and related descriptions thereof).

In some embodiments, as shown in FIG. 5A, the first capacitor and the second capacitor are spaced by air. In some embodiments, to improve structural reliability of the pressure sensor, as shown in FIG. 5B, a support body 540 is provided between the first capacitor and the second capacitor to space the first capacitor and the second capacitor.

It can be understood that, since the first capacitor and the second capacitor are arranged at intervals along a direction perpendicular to the pressure-sensitive direction of the pressure sensor 500, the projections of the first capacitor and the second capacitor in the pressure-sensitive direction of the pressure sensor 500 do not overlap. Based on this, the first capacitor and the second capacitor have respective sensitive regions (as shown in FIGs. 5A to 5F, the first capacitor corresponds to a sensitive region P1, and the second capacitor corresponds to a sensitive region P2), thereby allowing the first capacitor and the second capacitor to independently measure external pressure at their respective positions. Based on this structure, the pressure sensor 500 may be used to detect a sliding operation or other operations of a specific touch manner (e.g., detecting the above-mentioned operations based on position information of two or more capacitors and time information of a generated sensing signal).

In some embodiments, to further simplify the structure and a preparation process of the pressure sensor, the first electrode 230 and the third electrode 510 are two different regions on a single electrode. That is to say, the first electrode 230 and the third electrode 510 are combined into a single electrode. In this case, the first capacitor and the second capacitor respectively output capacitance signals. By way of example, as shown in FIG. 5C, the fourth electrode 530 of the pressure sensor 500 and the second electrode 250 are located on a same side of the first electrode 230, the second electrode 250 and the fourth electrode 530 respectively face different regions on the first electrode 230, and a second dielectric layer 520 exists between the fourth electrode 530 and the first electrode 230 to form a second capacitor.

In some embodiments, the fourth electrode 530 and the second electrode 250 may be designed as side-by-side externally arranged rectangular electrodes, or may be set as interdigitated electrodes or ring electrodes.

An output capacitance value of the pressure sensor 500 is equivalent to a capacitance value obtained by connecting the first capacitor and the second capacitor in series. The capacitance value may be determined based on the following Formula (4): ${C}_{6} = \frac{{C}_{61} {C}_{62}}{{C}_{61} + {C}_{62}}$ (4) where *C*₆ represents the output capacitance value of the pressure sensor 500; *C*₆₁ represents the capacitance value of the first capacitor; and *C*₆₂ represents the capacitance value of the second capacitor.

In some embodiments of the present disclosure, by setting the fourth electrode and the second electrode on the same side of the first electrode, when connecting the pressure sensor to an external circuit, only the second electrode and the fourth electrode need to be wired out, and there is no need to design leads for the first electrode. Since the second electrode and the fourth electrode are both located on the same side of the electrode, they can be conveniently connected to a same circuit board, thereby reducing wiring difficulty of the pressure sensor and significantly simplifying the structure and a preparation process.

In some embodiments, in the first electrode 230 and the third electrode 510, only the conductive layers are two different regions on a same conductive layer. By way of example, as shown in FIG. 5D, the conductive layer 231 of the first electrode 230 and the conductive layer 511 of the third electrode 510 are two different regions on a conductive layer 550. The material of the conductive layer 550 may be metal, conductive silicone, a conductive film, or the like.

In some embodiments, the first electrode and the third electrode are electrically connected. For example, the first electrode 230 and the third electrode 510 as shown in FIG. 5A or FIG. 5B may be electrically connected through a wire or conductive silicone. Further for example, the first electrode 230 (or the conductive layer thereof) and the third electrode 510 (or the conductive layer thereof) as shown in FIG. 5E or FIG. 5F are two different regions on a same electrode (or a same conductive layer). Furthermore, a side of the second electrode 250 and the fourth electrode 530 away from the first electrode 230 and the third electrode 510 is provided with a fifth electrode 560. The first electrode 230, the third electrode 510, and the fifth electrode 560 are grounded (grounding lines are not shown in the figures), as shown in FIG. 5E or FIG. 5F.

In some embodiments, as shown in FIG. 5E or FIG. 5F, the pressure sensor 500 further includes a protective layer 570 located outside of the fifth electrode 560. The protective layer 570 is configured to provide protection and support for the fifth electrode 560. The material of the protective layer 570 may be a PCB, silicone, or other flexible insulating material.

In some embodiments of the present disclosure, by arranging the second capacitor and the first capacitor at intervals along a direction perpendicular to the pressure-sensitive direction of the pressure sensor, synchronous measurement of the source position and magnitude of external pressure can be achieved.

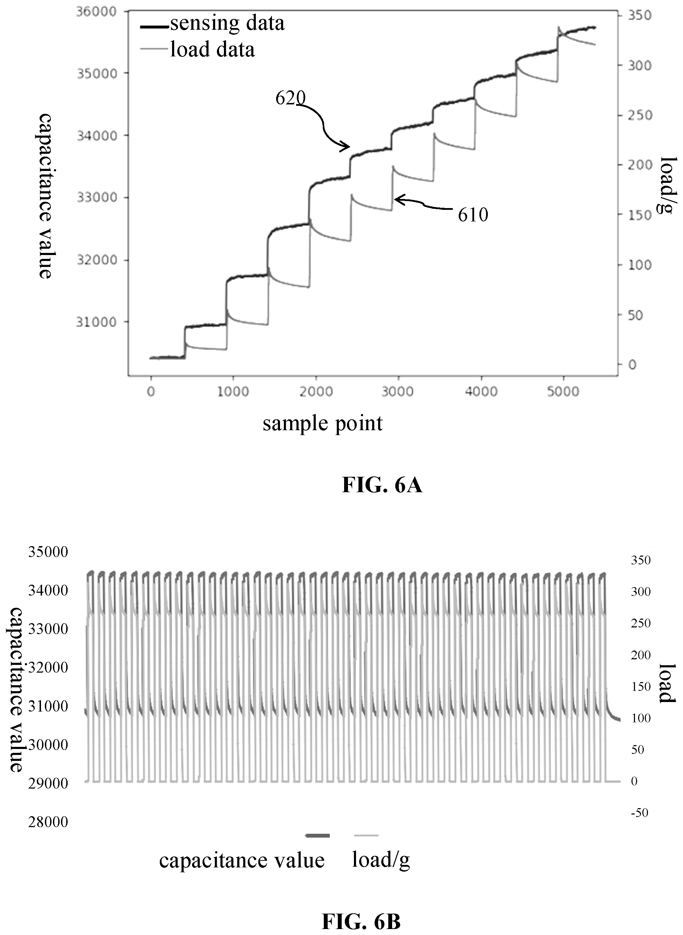

FIG. 6A is a sensitivity test graph of a pressure sensor according to some embodiments of the present disclosure. As shown in FIG. 6A, a curve 610 represents a load (i.e., external pressure) curve, and a curve 620 represents a capacitance value curve of a capacitor (e.g., the first capacitor) in the pressure sensor when a thickness of the flexible conductive protrusions of the pressure sensor is set to 200 µm and a substrate material is an FPC. It can be seen from FIG. 6A that the pressure sensor exhibits excellent sensitivity and linearity within the pressure range of 350 g, and at least pressure changes within 1 g can be precisely measured. Thus, it can be seen that the pressure sensor provided by the present disclosure may meet human-machine interaction requirements in consumer electronics.

FIG. 6B is a reliability test graph of a pressure sensor according to some embodiments of the present disclosure. As shown in FIG. 6B, the pressure sensor exhibits excellent stability and reliability, and still maintains stable performance after as many as 50,000 loading cycles.

Basic concepts have been described above. Apparently, to a person skilled in the art, the detailed disclosure described above is merely by way of example, and does not constitute a limitation on the present disclosure. Although not expressly stated herein, a person skilled in the art may make various modifications, improvements, and alterations to the present disclosure. Such modifications, improvements, and alterations are suggested in the present disclosure. Therefore, such modifications, improvements, and alterations still fall within the spirit and scope of the exemplary embodiments of the present disclosure.

## Claims

1. A pressure sensor, comprising:
a first capacitor formed of a first electrode, a second electrode, and a first dielectric layer located between the first electrode and the second electrode, wherein
a first conductive microstructure is disposed on the first electrode and is in contact with the first dielectric layer, and when the first electrode approaches the second electrode in response to an external pressure, the first conductive microstructure undergoes a deformation, and the deformation changes a first capacitance of the first capacitor and generates a sensing signal varying with the first capacitance.

2. The pressure sensor according to claim 1, wherein the first conductive microstructure includes a plurality of flexible conductive protrusions distributed at intervals, and a gap is formed between adjacent flexible conductive protrusions of the plurality of flexible conductive protrusions.

3. The pressure sensor according to claim 2, wherein the first conductive microstructure is formed of a metal-coated conductive sponge or a metal-coated conductive foamed material.

4. The pressure sensor according to claim 2, wherein the first electrode includes: a conductive layer, a conductive connection layer, and a conductive microstructure layer that are sequentially stacked, and the first conductive microstructure is located on a side of the conductive microstructure layer away from the conductive layer.

5. The pressure sensor according to claim 4, wherein
the conductive layer is formed of flexible conductive silicone or an indium tin oxide (ITO) conductive film;
the conductive connection layer is formed of conductive silicone, a conductive fabric, a conductive adhesive tape, or conductive epoxy adhesive; and
the conductive microstructure layer is formed of a metal-coated conductive sponge, a metal-coated conductive foamed material, conductive silicone doped with conductive particles, or conductive polydimethylsiloxane (PDMS).

6. The pressure sensor according to claim 1, further comprising:
a third electrode, wherein the first electrode, the second electrode, and the third electrode are arranged at intervals, and two outermost electrodes are grounded.

7. The pressure sensor according to claim 1, further comprising:
a second capacitor formed of a third electrode, a fourth electrode, and a second dielectric layer located between the third electrode and the fourth electrode, wherein the first capacitor and the second capacitor are arranged at intervals along a pressure-sensitive direction of the pressure sensor.

8. The pressure sensor according to claim 7, wherein two outermost electrodes in the pressure-sensitive direction are grounded, and two middle electrodes in the pressure-sensitive direction are electrically connected.

9. The pressure sensor according to claim 1, further comprising:
a second capacitor formed of a third electrode, a fourth electrode, and a second dielectric layer located between the third electrode and the fourth electrode, wherein the second capacitor and the first capacitor are arranged at intervals along a direction perpendicular to a pressure-sensitive direction of the pressure sensor.

10. The pressure sensor according to claim 1, further comprising:
a third electrode located on a same side of the first electrode as the second electrode, wherein the second electrode and the third electrode are respectively opposite to different regions of the first electrode, and a second dielectric layer exists between the third electrode and the first electrode to form a second capacitor.
